# EUROPEAN PATENT APPLICATION

(11) **EP 4 835 977 A1**
(43) Date of publication of application: **04.11.2026**
(21) Application number: 24921370.3
(22) Date of filing: 14.08.2024
(51) Int. Cl.: H01M 4/13, H01M 10/0525, H01M 4/02, H01M 50/531

(54) **ELECTRODE SHEET, ELECTRODE ASSEMBLY, BATTERY CELL, BATTERY, AND ELECTRIC DEVICE**

(30) Priority: 30.01.2024 CN 202410129806
(71) Applicant: Contemporary Amperex Technology Co., Limited, Ningde, Fujian 352100 (CN)
(72) Inventor: CHEN, Jiahua, Ningde, Fujian 352100 (CN); TANG, Zheng, Ningde, Fujian 352100 (CN); LI, Quanguo, Ningde, Fujian 352100 (CN); SUN, Jingxuan, Ningde, Fujian 352100 (CN); XU, Baoyun, Ningde, Fujian 352100 (CN); OUYANG, Shaocong, Ningde, Fujian 352100 (CN); YE, Yonghuang, Ningde, Fujian 352100 (CN)
(74) Representative: Kraus & Lederer PartGmbB
(86) International application number: PCT/CN2024/112160
(87) International publication number: WO 2025/161344

(57) **Abstract**

An electrode sheet, an electrode assembly, a battery cell, a battery, and an electric device. The electrode sheet is applied to a battery. The electrode sheet comprises a current collector and an active material layer. The current collector defines a coated region coated with an active material layer and a tab region not coated with an active material layer. The coated region comprises a main body region and a perforated region provided between the main body region and the tab region, wherein one or more holes are formed in the portion of the current collector at the perforated region. By configuring the coated region to comprise a main body region and a perforated region located between the main body region and the tab region, and forming one or more holes in the portion of the current collector at the perforated region, in the process of cold-pressing the electrode sheet, the elongation rate of the perforated region can be reduced, and the mismatch between the elongation rate of the coated region and the elongation rate of the tab region is alleviated, thereby reducing the formation of the tab region into crescent curves and waves, and reducing the occurrence of folding or wrinkling on the tab region during electrode sheet winding.

## Description

### CROSS-REFERENCE TO RELATED APPLICATION

The present disclosure is presented based on Chinese Patent Application No. 202410129806.4, filed on January 30, 2024 and entitled "ELECTRODE PLATE, ELECTRODE ASSEMBLY, BATTERY CELL, BATTERY, AND ELECTRIC DEVICE", and claims priority to the Chinese Patent Application, the content of which is incorporated herein by reference in its entirety.

### TECHNICAL FIELD

The present disclosure relates to the technical field of batteries, and in particular, to an electrode plate, an electrode assembly, a battery cell, a battery, and an electric device.

### BACKGROUND

This part is intended to provide background or context for embodiments of the present disclosure. The description herein is not recognized as the prior art by virtue of inclusion in this part.

In order to achieve higher energy density in a power battery, cold pressing is required for an electrode plate of a battery cell, such that an active material on the electrode plate can attain higher compacted density, thereby improving the volumetric energy density of the battery cell. As the compacted density increases, the elongation of the electrode plate of the battery cell also increases significantly. During the cold pressing, the thickness of a coating region coated with the active material on the electrode plate differs from the thickness of a blank region not coated with the active material, which easily leads to a mismatch in the elongation between the coating region and the blank region. Consequently, crescent curves or waves are formed in the blank region, causing the folding or wrinkling of a tab during a winding process.

### SUMMARY

In view of this, embodiments of the present disclosure are intended to provide an electrode plate, an electrode assembly, a battery cell, a battery, and an electric device, which can alleviate the folding or wrinkling of a tab during a winding process of the electrode plate.

To achieve the above objective, a first aspect of the embodiments of the present disclosure provides an electrode plate applied to a battery. The electrode plate includes a current collector and an active substance layer, where the current collector defines a coated region coated with the active substance layer and a tab region not coated with the active substance layer;

where the coated region includes a main body region and a perforated region disposed between the main body region and the tab region, and one or more holes are formed in the current collector of the perforated region.

The electrode plate according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of an electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector.

In some embodiments, a hole diameter of the hole formed in the current collector of the perforated region is D, and 0.1 µm ≤ D ≤ 400 µm.

By setting the hole diameter of the hole formed in the current collector of the perforated region to be within the range of 0.1 µm to 400 µm, the hole with the hole diameter within this range can reduce the elongation rate of the perforated region, such that a certain gradient of elongation is formed among the main body region, the perforated region, and the tab region, thereby alleviating the mismatch in the elongation rate between the coated region and the tab region and minimizing the impact on the strength of the perforated region.

In some embodiments, the hole diameter of the hole formed in the current collector of the perforated region is D, and 10 µm ≤ D ≤ 50 µm.

By setting the hole diameter of the hole formed in the current collector of the perforated region to 10 µm ≤ D ≤ 50 µm, the hole with the hole diameter within this range can effectively reduce the elongation rate of the perforated region, such that a certain gradient of elongation is formed among the main body region, the perforated region, and the tab region, thereby effectively alleviating the mismatch in the elongation rate between the coated region and the tab region and minimizing the impact on the strength of the perforated region.

In some embodiments, along a traveling direction of the electrode plate, a spacing between adjacent holes is L1, and 0.1 mm ≤ L1 ≤ 100 mm.

By setting the spacing between adjacent holes along the traveling direction of the electrode plate to 0.1 mm to 100 mm, the impact on the strength of the perforated region can be reduced, and the elongation rate of the perforated region can be reduced.

In some embodiments, along the traveling direction of the electrode plate, a spacing between adjacent holes is L1, and 0.5 mm ≤ L1 ≤ 10 mm.

By setting the spacing between adjacent holes along the traveling direction of the electrode plate to 0.5 mm to 10 mm, the impact on the strength of the perforated region can be minimized, and the elongation rate of the perforated region can be effectively reduced.

In some embodiments, in a direction perpendicular to a traveling direction of the electrode plate, a spacing between adjacent holes is L2, and 2 mm ≤ L2 ≤ 10 mm.

By setting the spacing between adjacent holes along the direction perpendicular to the traveling direction of the electrode plate to 2 mm to 10 mm, the impact on the strength of the perforated region can be minimized, and the elongation rate of the perforated region can be effectively reduced.

In some embodiments, a width of the perforated region along a traveling direction of the electrode plate is L3, and 0 mm < L3 ≤ 20 mm.

By setting the width of the perforated region along the traveling direction of the electrode plate to 0 mm < L3 ≤ 20 mm, the impact on the strength of the perforated region can be reduced, and the elongation rate of the perforated region can be reduced, such that a certain gradient of elongation is formed among the main body region, the perforated region, and the tab region, thereby alleviating the mismatch in the elongation rate between the coated region and the tab region.

In some embodiments, the width of the perforated region along the traveling direction of the electrode plate is L3, and 1 mm ≤ L3 ≤ 10 mm.

By setting the width of the perforated region along the traveling direction of the electrode plate to 1 mm ≤ L3 ≤ 10 mm, the impact on the strength of the perforated region can be minimized, and the elongation rate of the perforated region can be effectively reduced, such that a certain gradient of elongation is formed among the main body region, the perforated region, and the tab region, thereby alleviating the mismatch in the elongation rate between the coated region and the tab region.

In some embodiments, a molten pool is formed at an edge of the hole.

The hole is formed by laser, and the molten pool is formed at the edge of the hole. In this way, it is conducive to improving the strength of the perforated region.

In some embodiments, a plurality of the holes are provided, and all the holes are distributed on a plurality of trajectory lines; the holes on a single trajectory line are linearly arranged along a traveling direction of the electrode plate, and the plurality of trajectory lines are arranged in parallel along a direction perpendicular to the traveling direction of the electrode plate.

By machining the holes in the current collector of the perforated region according to a predetermined arrangement pattern, the control of the strength of the perforated region is further facilitated.

A second aspect of the embodiments of the present disclosure provides an electrode assembly. The electrode assembly includes a first electrode plate, a second electrode plate, and a separator, the separator is configured to separate the first electrode plate from the second electrode plate, and at least one of the first electrode plate and the second electrode plate is the electrode plate according to any embodiment of the present disclosure.

The electrode plate of the electrode assembly according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of the electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector.

A third aspect of the embodiments of the present disclosure provides a battery cell. The battery cell includes a packaging film and the electrode assembly described above, and the packaging film is wrapped outside the electrode assembly.

The electrode plate of the battery cell according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of the electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector.

A fourth aspect of the embodiments of the present disclosure provides a battery. The battery includes at least one battery cell described above.

The electrode plate of the battery according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of the electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector.

A fifth aspect of the embodiments of the present disclosure provides an electric device. The electric device includes the battery cell or the battery described above, and the battery cell or the battery is configured to store or provide electric energy.

The electrode plate of the battery of the electric device according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of the electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector.

### BRIEF DESCRIPTION OF THE DRAWINGS

FIG. 1 is a schematic structural diagram of a vehicle according to an embodiment of the present disclosure;
FIG. 2 is a three-dimensional schematic exploded diagram of a battery according to an embodiment of the present disclosure;
FIG. 3 is a schematic structural diagram of an electrode plate according to an embodiment of the present disclosure;
FIG. 4 is a top view of an electrode plate located at a hole before cold pressing according to an embodiment of the present disclosure;
FIG. 5 is a front view of an electrode plate located at a hole before cold pressing according to an embodiment of the present disclosure;
FIG. 6 is a top view of an electrode plate located at a hole after cold pressing according to an embodiment of the present disclosure;
FIG. 7 is a front view of an electrode plate located at a hole after cold pressing according to an embodiment of the present disclosure;
FIG. 8 is a schematic diagram showing an elongation rate test, in a stretched state, of an electrode plate according to an embodiment of the present disclosure and an electrode plate in the prior art, where the diagram shows an elongation rate of the electrode plate along a traveling direction;
FIG. 9 is a schematic diagram showing an elongation rate test, in a stretched state, of an electrode plate according to an embodiment of the present disclosure and an electrode plate in the prior art, where the diagram shows an elongation rate of the electrode plate along a direction perpendicular to a traveling direction;
FIG. 10 is a top view of an electrode plate before cold pressing in the prior art;
FIG. 11 is a front view of an electrode plate before cold pressing in the prior art;
FIG. 12 is a top view of an electrode plate after cold pressing in the prior art; and
FIG. 13 is a front view of an electrode plate after cold pressing in the prior art.

Description of reference numerals:
1: electrode plate; 1a: coated region; 1b: main body region; 1c: perforated region; 1d: tab region; 1e: hole; 11: current collector; 12: active substance layer; 10: battery cell; 20: case; 100: battery; 200: controller; 300: motor; 1000: vehicle.

### DETAILED DESCRIPTION

It should be noted that in the absence of conflicts, embodiments and technical features of the embodiments in the present disclosure may be combined with each other. The detailed description in the detailed description should be understood as an explanation of the purpose of the present disclosure and should not be considered as an improper limitation to the present disclosure.

Unless otherwise defined, all technical and scientific terms used herein have the same meaning as commonly understood by those skilled in the art to which the present disclosure belongs. The terms used herein are intended to merely describe the specific embodiments, rather than to limit the present disclosure. The terms "include", "comprise", "have", and "provided with", and any other variations thereof in the present disclosure are intended to cover non-exclusive inclusions.

In the description of the embodiments of the present disclosure, the technical terms "first", "second", "third", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", "height direction", "first direction", "second direction", and the like indicate orientations or positional relationships based on those shown in the drawings. They are merely for the convenience of describing the embodiments of the present disclosure and simplifying the description, rather than indicating or implying that the apparatus or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

With the development of clean energy, more and more devices are powered by electric energy, which in turn drives the rapid development of power batteries (such as lithium-ion batteries) that can store large amounts of electric energy and undergo multiple charge-discharge cycles. Power batteries are not only applied in energy storage power systems such as hydropower, thermal power, wind power, and solar power stations, but are also widely applied in electric transportation vehicles such as electric bicycles, electric motorcycles, or electric vehicles, as well as in aerospace and other fields.

In the present disclosure, battery cells may include lithium-ion secondary batteries, lithium-ion primary batteries, lithium-sulfur batteries, sodium-lithium-ion batteries, sodium-ion batteries, magnesium-ion batteries, or the like. This is not limited in the embodiments of the present disclosure. The battery cell may be cylindrical, rectangular parallelepiped-shaped, or in other shapes. This is also not limited in the embodiments of the present disclosure.

The battery mentioned in the embodiments of the present disclosure refers to a single physical module including one or more battery cells to provide higher voltage and capacity. For example, the battery mentioned in the present disclosure may include a battery module, a battery pack, or the like. The battery generally includes a case configured to encapsulate one or more battery cells. The case can prevent liquid or other foreign matter from affecting the charging or discharging of the battery cells.

A battery cell includes an electrode assembly and an electrolytic solution. The electrode assembly is composed of a positive electrode plate, a negative electrode plate, and a separator. The battery cell primarily works by the movement of metal ions between the positive electrode plate and the negative electrode plate. The positive electrode plate includes a positive electrode current collector and a positive electrode active substance layer. The positive electrode active substance layer is coated on the surface of the positive electrode current collector. The positive electrode current collector not coated with the positive electrode active substance layer protrudes from the positive electrode current collector coated with the positive electrode active substance layer. The positive electrode current collector not coated with the positive electrode active substance layer serves as a positive electrode tab. Taking lithium-ion batteries as an example, the material of the positive electrode current collector may be aluminum, and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on the surface of the negative electrode current collector. The negative electrode current collector not coated with the negative electrode active substance layer protrudes from the negative electrode current collector coated with the negative electrode active substance layer. The negative electrode current collector not coated with the negative electrode active substance layer serves as a negative electrode tab. The material of the negative electrode current collector may be copper, and the negative electrode active substance may be carbon, silicon, or the like. To ensure the passing of a large current without fusing, a plurality of positive electrode tabs are provided and stacked together, and a plurality of negative electrode tabs are provided and stacked together. The material of the separator may be polypropylene (PP), polyethylene (PE), or the like.

The battery cell further includes a packaging film and a housing. The packaging film is wrapped outside the electrode assembly, and the housing encapsulates the electrode assembly wrapped with the packaging film to form the battery cell. The packaging film may be a Mylar film (mylar film), and the housing may be an aluminum housing. After the electrode assembly is wound and formed, the encapsulation of the Mylar film and the housing is completed through a Mylar packaging process and a housing insertion process. The Mylar film functions to seal and protect the electrode assembly, and the Mylar film can effectively insulate the electrode assembly from the housing to avoid short circuits inside the battery cell. The housing serves a protective function.

The electrode plate preparation process generally includes processes such as slurry preparation, coating, cold pressing, and tab die-cutting. The coating process includes applying a well-stirred active substance onto the current collector, such that the current collector is provided with a coated region coated with an active substance layer and a blank region not coated with the active substance layer. The blank region serves as a tab after treatment (e.g., through a tab die-cutting process). Generally, in order to improve the coating efficiency, a roll coating process is commonly adopted, in which a rotating roller is used as a carrier of an active substance, the active substance forms a wet film with a certain thickness on the surface of the rotating roller, and then, as the rotating roller comes into contact with the current collector during rotation, the active substance is applied on the surface of the current collector. The cold pressing process involves rolling the electrode plate attached with the active substance using a cold pressing apparatus. In one aspect, this makes the coating material more compact, improves the energy density, and ensures the thickness consistency; in another aspect, dust and humidity are further controlled.

During the cold pressing process, the thickness of the coating region coated with the active material on the electrode plate differs from the thickness of the blank region not coated with the active material, which easily leads to a mismatch in the elongation between the coating region and the blank region. The coating region coated with the active material on the electrode plate elongates along a traveling direction under the action of compressive stress and the tension in the traveling direction. However, in the length direction, the blank region not coated with the active material does not elongate along the traveling direction due to the absence of compressive stress. This may cause the blank region to be subjected to a large tensile force, making it prone to breakage, or result in crescent curves or waves in the blank region, thereby leading to the problem of folding or wrinkling of the tab during the winding process.

In view of this, to alleviate the folding or wrinkling of the tab during the winding process of the electrode plate, the present disclosure provides an electrode plate applied to a battery. The electrode plate includes a current collector and an active substance layer. The current collector defines a coated region coated with the active substance layer and a tab region not coated with the active substance layer. The coated region includes a main body region and a perforated region disposed between the main body region and the tab region, and one or more holes are formed in the current collector of the perforated region.

The electrode plate according to the embodiments of the present disclosure includes a current collector and an active substance layer, where the current collector defines a coated region coated with the active substance layer and a tab region not coated with the active substance layer. By configuring the coated region to include the main body region and the perforated region located between the main body region and the tab region, and forming one or more holes in the current collector of the perforated region, during cold pressing of the electrode plate, the current collector of the perforated region can extend into the hole, such that the elongation rate of the perforated region can be reduced under a constant compressive stress. In addition, the active substance layer near the hole is relatively loose, which can alleviate the elongation of the current collector and further reduce the elongation rate of the perforated region. That is, after cold pressing, the elongation rate of the main body region is greater than the elongation rate of the perforated region, and the elongation rate of the perforated region is greater than the elongation rate of the tab region. That is, a certain gradient of elongation is formed among the main body region, the perforated region, and the tab region, which alleviates the mismatch in the elongation rate between the coated region and the tab region, thereby alleviating the crescent curves or waves in the tab region, and alleviating the folding or wrinkling of the tab region during the winding process of the electrode plate. In addition, the elongation of the current collector of the perforated region into the hole can increase the strength of the perforated region; that is, the strength of the perforated region is made close to the strength of the coated region. In other words, the impact on the strength of the perforated region can be minimized while alleviating the mismatch in the elongation rate between the coated region and the tab region.

Furthermore, in the production process of the electrode, to alleviate the folding of the tab region, a pattern is typically embossed on the tab region to form reinforcing ribs. In this way, the tab region needs to be stretched by a certain amount more than the coated region to enable embossing of the reinforcing ribs. However, due to the large elongation of the coated region, embossing the pattern on the tab region is likely to cause the breakage of the current collector. However, in the electrode plate according to the embodiments of the present disclosure, by configuring the coated region to include the main body region and the perforated region located between the main body region and the tab region, and forming the hole in the current collector of the perforated region, the elongation rate of the perforated region is less than the elongation rate of the main body region, thereby alleviating the situation where embossing the pattern on the tab region is likely to cause the breakage of the current collector. The technical solutions described in the embodiments of the present disclosure are applicable to battery cells, batteries, and electric devices using batteries.

The electric device may be a vehicle, a mobile phone, a portable device, a laptop computer, a ship, a spacecraft, an electric toy, an electric tool, or the like. The vehicle may be a fuel vehicle, a gas vehicle, or a new energy vehicle, and the new energy vehicle may be a pure electric vehicle, a hybrid vehicle, an extended-range vehicle, or the like; the spacecraft includes an airplane, a rocket, a space shuttle, a spaceship, and the like; the electric toy includes a stationary or mobile electric toy, such as a game console, an electric car toy, an electric ship toy, and an electric airplane toy; the electric tool includes an electric metal cutting tool, an electric grinding tool, an electric assembling tool, and an electric tool for railways, such as an electric drill, an electric grinder, an electric wrench, an electric screwdriver, an electric hammer, an electric impact drill, a concrete vibrator, and an electric planer. The electric device described above is not specially limited in the embodiments of the present disclosure.

For ease of explanation, the following embodiments will be described by taking a vehicle as an example of the electric device.

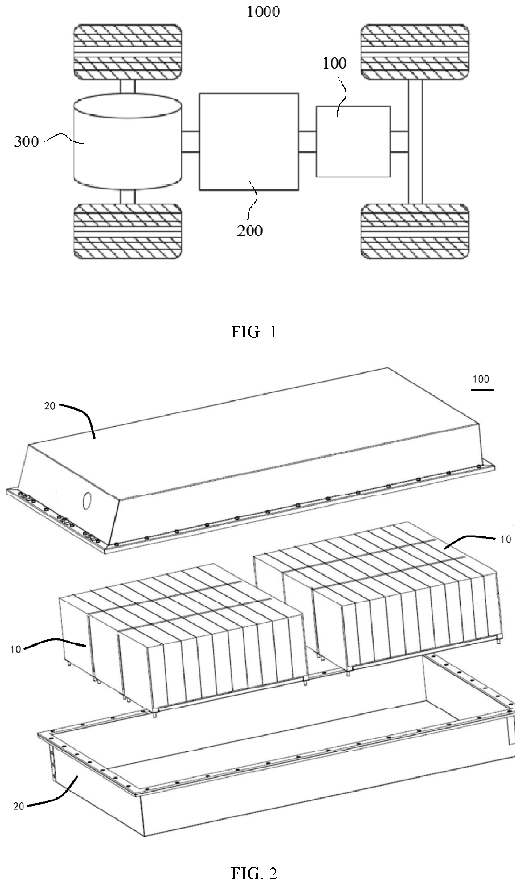

FIG. 1 is a schematic structural diagram of a vehicle 1000 according to some embodiments of the present disclosure. A controller 200, a motor 300, and a battery 100 may be disposed inside the vehicle 1000. The controller 200 is configured to control the battery 100 to supply power to the motor 300. For example, the battery 100 may be disposed at the bottom, front, or rear of the vehicle 1000. The battery 100 may be configured to supply power to the vehicle 1000. For example, the battery 100 may serve as an operation power source for the vehicle 1000 and is configured in a circuit system of the vehicle 1000, for example, for the startup and navigation of the vehicle 1000 and for the working power demand during operation. In another embodiment of the present disclosure, the battery 100 may not only serve as an operation power source for the vehicle 1000, but also serve as a driving power source for the vehicle 1000 to, replacing or partially replacing fuel or natural gas, provide driving power for the vehicle 1000.

The battery 100 includes at least one battery cell 10. One or a plurality of battery cells 10 may be provided.

Referring to FIG. 2, the plurality of battery cells 10 may be connected in series, in parallel, or in series-parallel. The series-parallel connection means that both series connection and parallel connection are present for the connection among the plurality of battery cells 10. The plurality of battery cells 10 may be directly connected in series, in parallel, or in series-parallel, and then the whole formed by the plurality of battery cells 10 is accommodated in the case 20. Certainly, the case may also be that in the battery 100, a plurality of battery cells 10 are first connected in series, in parallel, or in series-parallel to form battery 100 modules, and then the plurality of battery 100 modules are connected in series, in parallel, or in series-parallel to form a whole and accommodated in the case 20. The battery 100 may further include other structures. For example, the battery 100 may further include a busbar component for achieving an electrical connection among the plurality of battery cells 10. Each battery cell 10 may be a secondary battery or a primary battery; it may also be a lithium-sulfur battery 100, a sodium-ion battery 100, or a magnesium-ion battery 100, but is not limited thereto. The battery cell 10 may be cylindrical, flat, rectangular parallelepiped-shaped, or in other shapes.

The battery cell 10 includes an electrode assembly and a packaging film. The packaging film is wrapped outside the electrode assembly.

The electrode assembly is of a wound structure and includes a first electrode plate, a second electrode plate, and a separator. The separator is configured to separate the first electrode plate from the second electrode plate. At least one of the first electrode plate and the second electrode plate is an electrode plate 1 according to any embodiment of the present disclosure.

The expression that at least one of the first electrode plate and the second electrode plate is the electrode plate 1 according to any embodiment of the present disclosure means that the first electrode plate may be the electrode plate 1 according to any embodiment of the present disclosure, or the second electrode plate may be the electrode plate 1 according to any embodiment of the present disclosure, or each of the first electrode plate and the second electrode plate may be the electrode plate 1 according to any embodiment of the present disclosure.

Taking a sodium-ion battery as an example, future applications in passenger vehicles and energy storage systems require higher energy density. Generally, the compacted density of the electrode plate 1 needs to be increased to improve the energy density of the cell. In fact, hard carbon with high specific energy density is commonly used as the negative electrode of the sodium-ion battery. As the compacted density increases, the elongation of a coated region 1a also increases significantly (graphite typically exhibits a cold-press elongation of ≤ 0.1%, while hard carbon typically exhibits a cold-press elongation of > 0.2%). Due to the thickness difference between the tab region 1d and the coated region 1a (the tab region 1d has no active substance layer 12), the coated region 1a and the tab region 1d are prone to elongation mismatch, resulting in crescent curves and waves in the tab region 1d, thereby causing the folding or wrinkling of the tab during the winding process. In addition, the active substance layer 12 at the edge of the coated region 1a tends to be thicker than that at the central part of the coated region 1a, making it prone to edge collapse due to over-compression during cold pressing.

The reasons for the mismatch in the elongation between the coated region 1a and the tab region 1d include: large compacted density under cold pressing (for achieving high energy density), and high hardness and poor sliding capability of negative electrode material; inconsistent thicknesses between the coated region 1a and the tab region 1d, and inconsistent cold-press elongation; large cold-press elongation, which substantially reaches the upper limit of elongation that the current collector 11 can withstand, making production fluctuations easily cause over-elongation or edge cracking. In addition, in the production process of the electrode, to alleviate the folding of the tab region 1d, a pattern is typically embossed on the tab region 1d to form reinforcing ribs. In this way, the tab region 1d needs to be stretched by a certain amount (typically 0.3%) more than the coated region 1a to enable embossing of the reinforcing ribs. However, due to the large elongation of the coated region 1a, embossing the pattern on the tab region 1d is likely to cause the breakage of the current collector 11.

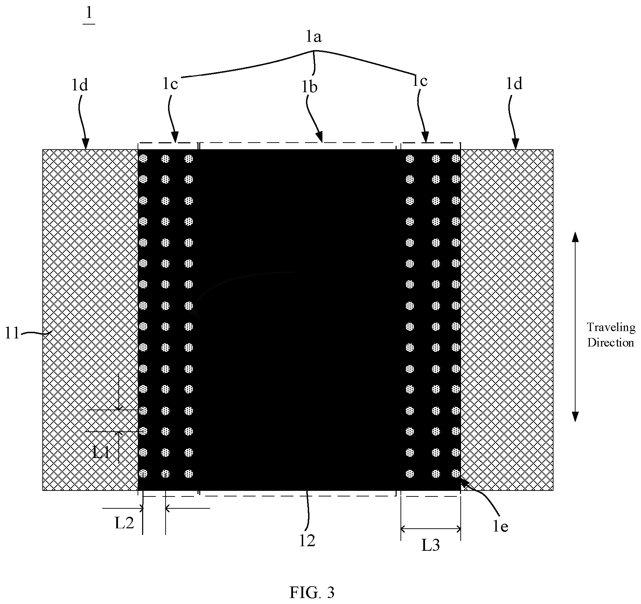

The electrode plate 1 according to the embodiments of the present disclosure is applied to the battery 100. Referring to FIGs. 3 to 7, the electrode plate 1 includes a current collector 11 and an active substance layer 12. The current collector 11 defines a coated region 1a coated with the active substance layer 12 and a tab region 1d not coated with the active substance layer 12. The coated region 1a includes a main body region 1b and a perforated region 1c disposed between the main body region 1b and the tab region 1d, and one or more holes 1e are formed in the current collector 11 of the perforated region 1c.

The coated region 1a includes a main body region 1b and a perforated region 1c disposed between the main body region 1b and the tab region 1d. That is, the main body region 1b and the tab region 1d are connected via the perforated region 1c.

It should be noted that the main body region 1b refers to a region of the current collector 11 where no hole 1e is formed, and the perforated region 1c is a region of the current collector 11 where a hole 1e is formed.

It should be noted that the number of holes 1e formed in the current collector 11 of the perforated region 1c is not limited herein. That is, one or more holes 1e are formed in the current collector 11 of the perforated region 1c.

The specific type of the hole 1e is not limited herein. For example, the hole 1e may be a through hole or a blind hole.

It can be understood that forming the hole 1e in the perforated region 1c can reduce the elongation of the perforated region 1c, while the strength of the perforated region 1c remains substantially unchanged. For the perforated region 1c, the hole 1e is formed in the current collector 11 to reduce the upper limit of elongation of the perforated region 1c (the difference between the upper limit of elongation of the perforated region 1c and the upper limit of elongation of the main body region 1b is achieved by regulating the distribution of the holes 1e), thereby reserving a larger elongation processing interval for the tab region 1d.

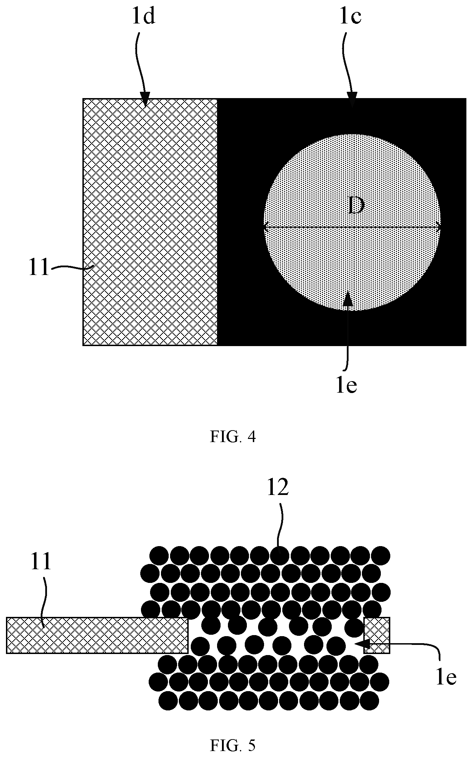

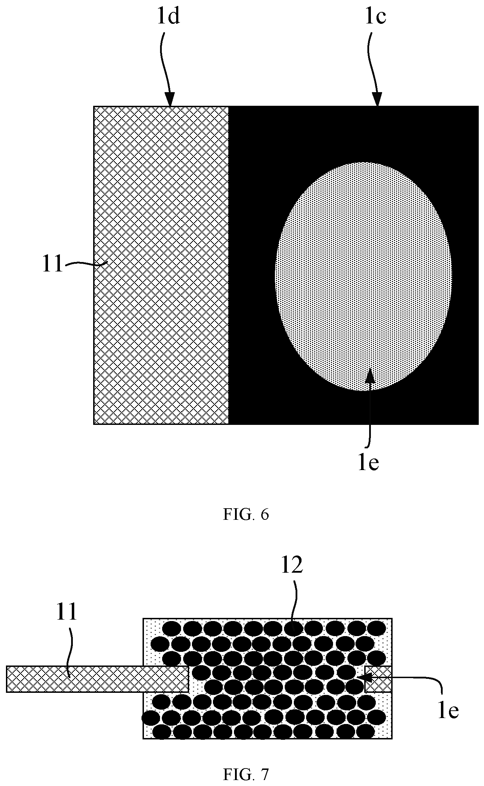

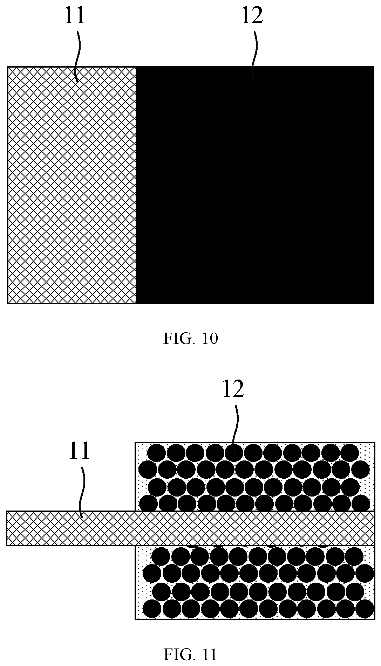

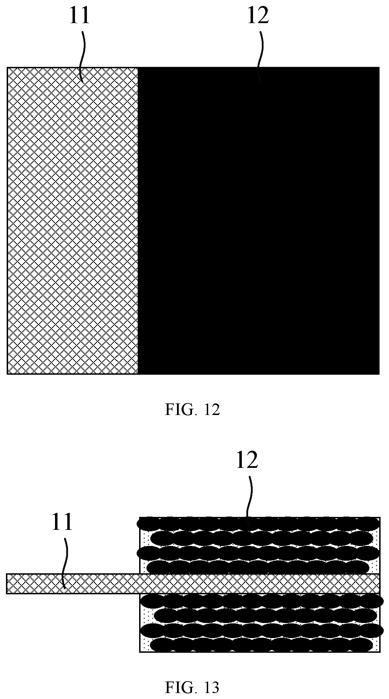

FIG. 4 is a top view of an electrode plate located at a hole before cold pressing according to an embodiment of the present disclosure; FIG. 5 is a front view of an electrode plate located at a hole before cold pressing according to an embodiment of the present disclosure; FIG. 6 is a top view of an electrode plate located at a hole after cold pressing according to an embodiment of the present disclosure; FIG. 7 is a front view of an electrode plate located at a hole after cold pressing according to an embodiment of the present disclosure; FIG. 10 is a top view of an electrode plate before cold pressing in the prior art; FIG. 11 is a front view of an electrode plate before cold pressing in the prior art; FIG. 12 is a top view of an electrode plate after cold pressing in the prior art; and FIG. 13 is a front view of an electrode plate after cold pressing in the prior art. It can be seen that the active substance layer 12 near the hole 1e is relatively loose, which can alleviate the elongation of the current collector 11 and further reduce the elongation rate of the perforated region 1c.

The electrode plate 1 according to the embodiments of the present disclosure includes a current collector 11 and an active substance layer 12. The current collector 11 defines a coated region 1a coated with the active substance layer 12 and a tab region 1d not coated with the active substance layer 12. By configuring the coated region 1a to include the main body region 1b and the perforated region 1c located between the main body region 1b and the tab region 1d, and forming one or more holes 1e in the current collector 11 of the perforated region 1c, during cold pressing of the electrode plate 1, the current collector 11 of the perforated region 1c can extend into the hole 1e, such that the elongation rate of the perforated region 1c can be reduced under a constant compressive stress. In addition, the active substance layer 12 near the hole 1e is relatively loose, which can alleviate the elongation of the current collector 11 and further reduce the elongation rate of the perforated region 1c. That is, after cold pressing, the elongation rate of the main body region 1b is greater than the elongation rate of the perforated region 1c, and the elongation rate of the perforated region 1c is greater than the elongation rate of the tab region 1d. That is, a certain gradient of elongation is formed among the main body region 1b, the perforated region 1c, and the tab region 1d, which alleviates the mismatch in the elongation rate between the coated region 1a and the tab region 1d, thereby alleviating the crescent curves or waves in the tab region 1d, and alleviating the folding or wrinkling of the tab region 1d during the winding process of the electrode plate 1. In addition, the elongation of the current collector 11 of the perforated region 1c into the hole 1e can increase the strength of the perforated region 1c; that is, the strength of the perforated region 1c is made close to the strength of the coated region 1a. In other words, the impact on the strength of the perforated region 1c can be minimized while alleviating the mismatch in the elongation rate between the coated region 1a and the tab region 1d.

Furthermore, in the production process of the electrode, to alleviate the folding of the tab region 1d, a pattern is typically embossed on the tab region 1d to form reinforcing ribs. In this way, the tab region 1d needs to be stretched by a certain amount more than the coated region 1a to enable embossing of the reinforcing ribs. However, due to the large elongation of the coated region 1a, embossing the pattern on the tab region 1d is likely to cause the breakage of the current collector 11. However, in the electrode plate 1 according to the embodiments of the present disclosure, by configuring the coated region 1a to include the main body region 1b and the perforated region 1c located between the main body region 1b and the tab region 1d, and forming the hole 1e in the current collector 11 of the perforated region 1c, the elongation rate of the perforated region 1c is less than the elongation rate of the main body region 1b, thereby alleviating the situation where embossing the pattern on the tab region 1d is likely to cause the breakage of the current collector 11.

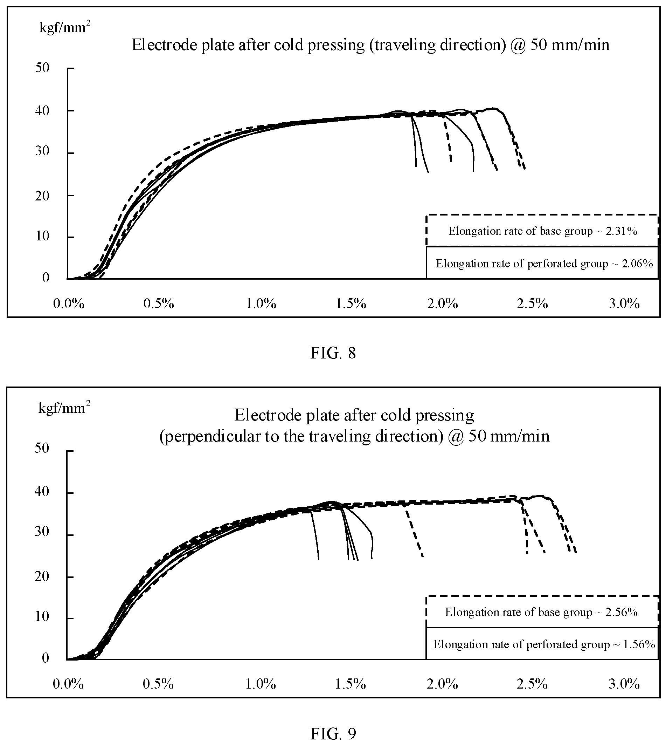

Illustratively, FIG. 8 is a schematic diagram showing an elongation rate test, in a stretched state, of an electrode plate according to an embodiment of the present disclosure and an electrode plate in the prior art, where the diagram shows an elongation rate of the electrode plate along a traveling direction; FIG. 9 is a schematic diagram showing an elongation rate test, in a stretched state, of an electrode plate according to an embodiment of the present disclosure and an electrode plate in the prior art, where the diagram shows an elongation rate of the electrode plate along a direction perpendicular to the traveling direction. That is, the electrode plate according to the embodiment of the present disclosure and the electrode plate in the prior art are stretched under the same tensile force (illustratively, the electrode plate is stretched at 50 mm/min) to detect the elongation rate of the electrode plate according to the embodiment of the present disclosure and the electrode plate in the prior art. The dashed lines shown in FIGs. 8 and 9 represent the elongation rate of the electrode plate in the prior art (serving as a control group), and the solid lines shown in FIGs. 8 and 9 represent the elongation rate of the electrode plate according to the embodiment of the present disclosure. It can be seen that under the same tensile force, the electrode plate according to the embodiment of the present disclosure exhibits a lower elongation rate than that of the electrode plate in the prior art, regardless of whether in the traveling direction or in the direction perpendicular to the traveling direction. That is, in the electrode plate 1 according to the embodiment of the present disclosure, by configuring the coated region 1a to include the main body region 1b and the perforated region 1c located between the main body region 1b and the tab region 1d, and forming one or more holes 1e in the current collector 11 of the perforated region 1c, during cold pressing of the electrode plate 1, the current collector 11 of the perforated region 1c can extend into the hole 1e, such that the elongation rate of the perforated region 1c can be reduced under a constant compressive stress. In addition, the active substance layer 12 near the hole 1e is relatively loose, which can alleviate the elongation of the current collector 11 and further reduce the elongation rate of the perforated region 1c. That is, after cold pressing, the elongation rate of the main body region 1b is greater than the elongation rate of the perforated region 1c, and the elongation rate of the perforated region 1c is greater than the elongation rate of the tab region 1d. That is, a certain gradient of elongation is formed among the main body region 1b, the perforated region 1c, and the tab region 1d, which alleviates the mismatch in the elongation rate between the coated region 1a and the tab region 1d, thereby alleviating the crescent curves or waves in the tab region 1d, and alleviating the folding or wrinkling of the tab region 1d during the winding process of the electrode plate 1.

In some embodiments, referring to FIG. 3, a plurality of holes 1e are provided. All the holes 1e are distributed on a plurality of trajectory lines. The holes 1e on a single trajectory line are linearly arranged along the traveling direction of the electrode plate 1, and the plurality of trajectory lines are arranged in parallel along the direction perpendicular to the traveling direction of the electrode plate 1. That is, the holes 1e are arranged according to a special arrangement pattern, which facilitates the machining of the holes 1e according to the predetermined arrangement pattern during the forming process, and is more conducive to controlling the strength of the perforated region 1c.

The main body region 1b, the perforated region 1c, and the tab region 1d are sequentially arranged along the traveling direction of the electrode plate 1.

The holes 1e on a single trajectory line refer to a single column of holes 1e, and the single column of holes 1e is sequentially arranged along the traveling direction of the electrode plate 1. The plurality of trajectory lines refer to a plurality of columns of holes 1e, and the plurality of columns of holes 1e are arranged in parallel along the direction perpendicular to the traveling direction of the electrode plate 1.

By machining the holes 1e in the current collector 11 of the perforated region 1c according to the predetermined arrangement pattern, the control of the strength of the perforated region 1c is further facilitated.

In some embodiments, referring to FIG. 4, a hole diameter of the hole 1e formed in the current collector 11 of the perforated region 1c is D, where 0.1 µm ≤ D ≤ 400 µm. For example, the hole diameter is 0.1 µm, 1 µm, 5 µm, 10 µm, 20 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, 310 µm, 320 µm, 330 µm, 340 µm, 350 µm, 360 µm, 370 µm, 380 µm, 390 µm, 400 µm, or the like.

By setting the hole diameter of the hole 1e formed in the current collector 11 of the perforated region 1c to be within the range of 0.1 µm to 400 µm, the hole 1e with the hole diameter within this range can reduce the elongation rate of the perforated region 1c, such that a certain gradient of elongation is formed among the main body region 1b, the perforated region 1c, and the tab region 1d, thereby alleviating the mismatch in the elongation rate between the coated region 1a and the tab region 1d and minimizing the impact on the strength of the perforated region 1c.

In some embodiments, referring to FIG. 4, the hole diameter of the hole 1e formed in the current collector 11 of the perforated region 1c is D, where 10 µm ≤ D ≤ 50 µm. For example, the hole diameter is 10 µm, 11 µm, 12 µm, 16 µm, 17 µm, 18 µm, 20 µm, 21 µm, 22 µm, 24 µm, 25 µm, 26 µm, 27 µm, 28 µm, 30 µm, 34 µm, 35 µm, 36 µm, 38 µm, 39 µm, 40 µm, 42 µm, 45 µm, 46 µm, 47 µm, 48 µm, 49 µm, 50 µm, or the like.

By setting the hole diameter of the hole 1e formed in the current collector 11 of the perforated region 1c to 10 µm ≤ D ≤ 50 µm, the hole 1e with the hole diameter within this range can effectively reduce the elongation rate of the perforated region 1c, such that a certain gradient of elongation is formed among the main body region 1b, the perforated region 1c, and the tab region 1d, thereby effectively alleviating the mismatch in the elongation rate between the coated region 1a and the tab region 1d and minimizing the impact on the strength of the perforated region 1c.

In some embodiments, referring to FIG. 3, along the traveling direction of the electrode plate 1, a spacing between adjacent holes 1e is L1, where 0.1 mm ≤ L1 ≤ 100 mm. For example, the spacing is 0.1 mm, 0.2 mm, 0.3 mm, 0.4 mm, 0.5 mm, 1 mm, 10 mm, 11 mm, 12 mm, 15 mm, 18 mm, 20 mm, 23 mm, 24 mm, 25 mm, 28 mm, 30 mm, 33 mm, 35 mm, 40 mm, 48 mm, 50 mm, 53 mm, 60 mm, 65 mm, 70 mm, 76 mm, 80 mm, 85 mm, 88 mm, 89 mm, 90 mm, 98 mm, 100 mm, or the like.

By setting the spacing between adjacent holes 1e along the traveling direction of the electrode plate 1 to 0.1 mm to 100 mm, the impact on the strength of the perforated region 1c can be reduced, and the elongation rate of the perforated region 1c can be reduced.

In some embodiments, referring to FIG. 3, along the traveling direction of the electrode plate 1, a spacing between adjacent holes 1e is L1, where 0.5 mm ≤ L1 ≤ 10 mm. For example, the spacing is 0.5 mm, 0.6 mm, 0.7 mm, 0.8 mm, 0.9 mm, 1 mm, 1.1 mm, 1.2 mm, 1.5 mm, 1.8 mm, 2.0 mm, 2.3 mm, 2.4 mm, 2.5 mm, 2.8 mm, 3.0 mm, 3.3 mm, 3.5 mm, 4.0 mm, 4.8 mm, 5.0 mm, 5.3 mm, 6.0 mm, 6.5 mm, 7.0 mm, 7.6 mm, 8.0 mm, 8.5 mm, 8.8 mm, 9.0 mm, 9.5 mm, 10 mm, or the like.

By setting the spacing between adjacent holes 1e along the traveling direction of the electrode plate 1 to 0.5 mm to 10 mm, the impact on the strength of the perforated region 1c can be minimized, and the elongation rate of the perforated region 1c can be effectively reduced.

In some embodiments, referring to FIG. 3, along the direction perpendicular to the traveling direction of the electrode plate 1, a spacing between adjacent holes 1e is L2, where 2 mm ≤ L2 ≤ 10 mm. For example, the spacing is 2.0 mm, 2.1 mm, 2.2 mm, 2.5 mm, 2.6 mm, 3.0 mm, 3.4 mm, 3.5 mm, 4.0 mm, 4.6 mm, 5.0 mm, 5.6 mm, 6.0 mm, 6.5 mm, 7.0 mm, 7.5 mm, 8.0 mm, 8.3 mm, 8.8 mm, 9.0 mm, 9.6 mm, 10 mm, or the like.

By setting the spacing between adjacent holes 1e along the direction perpendicular to the traveling direction of the electrode plate 1 to 2 mm to 10 mm, the impact on the strength of the perforated region 1c can be minimized, and the elongation rate of the perforated region 1c can be effectively reduced.

In some embodiments, referring to FIG. 3, a width of the perforated region 1c along the traveling direction of the electrode plate 1 is L3, where 0 mm < L3 ≤ 20 mm. For example, the width is 0.2mm, 0.5 mm, 1 mm, 10 mm, 11 mm, 12 mm, 13 mm, 14 mm, 14.5 mm, 15 mm, 15.5 mm, 16 mm, 17 mm, 18 mm, 18.8 mm, 19 mm, 19.6 mm, 20 mm, or the like.

By setting the width of the perforated region 1c along the traveling direction of the electrode plate 1 to 0 mm < L3 ≤ 20 mm, the impact on the strength of the perforated region 1c can be reduced, and the elongation rate of the perforated region 1c can be reduced, such that a certain gradient of elongation is formed among the main body region 1b, the perforated region 1c, and the tab region 1d, thereby alleviating the mismatch in the elongation rate between the coated region 1a and the tab region 1d.

In some embodiments, referring to FIG. 3, the width of the perforated region 1c along the traveling direction of the electrode plate 1 is L3, where 1 mm ≤ L3 ≤ 10 mm. For example, the width is 1.0 mm, 1.2 mm, 1.3 mm, 1.5 mm, 1.8 mm, 2.0 mm, 2.2 mm, 2.5 mm, 2.8 mm, 3.0 mm, 3.4 mm, 3.5 mm, 4.0 mm, 4.8 mm, 5.0 mm, 5.5 mm, 6.0 mm, 6.8 mm, 7.0 mm, 7.6 mm, 8.0 mm, 8.5 mm, 8.8 mm, 9.0 mm, 9.5 mm, 10 mm, or the like.

By setting the width of the perforated region 1c along the traveling direction of the electrode plate 1 to 1 mm ≤ L3 ≤ 10 mm, the impact on the strength of the perforated region 1c can be minimized, and the elongation rate of the perforated region 1c can be effectively reduced, such that a certain gradient of elongation is formed among the main body region 1b, the perforated region 1c, and the tab region 1d, thereby alleviating the mismatch in the elongation rate between the coated region 1a and the tab region 1d.

It should be noted that the specific forming method of the hole 1e is not limited herein. For example, the hole 1e is formed in the current collector 11 of the perforated region 1c by laser drilling, the hole 1e is formed by laser, and a molten pool is formed at the edge of the hole 1e. In this way, it is conducive to improving the strength of the perforated region 1c.

It should be noted that the measurement methods for the hole diameter D of the hole 1e formed in the current collector 11 of the perforated region 1c, the spacing L1 between adjacent holes 1e in the traveling direction of the electrode plate 1, the spacing L2 between adjacent holes 1e along the direction perpendicular to the traveling direction of the electrode plate 1, and the width L3 of the perforated region 1c along the traveling direction of the electrode plate 1 are not limited herein. Illustratively, the measurement may be performed by an electron microscope. For example, an electron microscope image is captured by an electron microscope measurement, and the measurement is performed on the electron microscope image.

In the description of the present disclosure, the description of reference terms "in an embodiment", "in some embodiments", "in some other embodiments", "in yet some other embodiments", "illustratively", or the like means that a particular feature, structure, material, or characteristic described in connection with the embodiments or examples is included in at least one embodiment or example of the embodiments of the present disclosure. In the present disclosure, the illustrative expressions of the above terms are not necessarily directed to the same embodiment or example. Moreover, the specific features, structures, materials, or characteristics described may be combined appropriately in any one or more embodiments or examples. In addition, various embodiments or examples and features of various embodiments or examples described in the present disclosure can be combined by those skilled in the art to the extent that they do not contradict each other.

The above descriptions are only preferred embodiments of the present disclosure and are not intended to limit the present disclosure. For those skilled in the art, the present disclosure can be modified and varied. Any modifications, equivalent substitutions, improvements, and the like made within the spirit and principle of the present disclosure all fall within the protection scope of the present disclosure.

## Claims

1. An electrode plate applied to a battery, the electrode plate comprising a current collector and an active substance layer, wherein the current collector defines a coated region coated with the active substance layer and a tab region not coated with the active substance layer;
wherein the coated region comprises a main body region and a perforated region disposed between the main body region and the tab region, and one or more holes are formed in the current collector of the perforated region.

2. The electrode plate according to claim 1, wherein a hole diameter of the hole formed in the current collector of the perforated region is D, and 0.1 µm ≤ D ≤ 400 µm.

3. The electrode plate according to claim 2, wherein the hole diameter of the hole formed in the current collector of the perforated region is D, and 10 µm ≤ D ≤ 50 µm.

4. The electrode plate according to any one of claims 1 to 3, wherein along a traveling direction of the electrode plate, a spacing between adjacent holes is L1, and 0.1 mm ≤ L1 ≤ 100 mm.

5. The electrode plate according to claim 4, wherein along the traveling direction of the electrode plate, a spacing between adjacent holes is L1, and 0.5 mm ≤ L1 ≤ 10 mm.

6. The electrode plate according to any one of claims 1 to 5, wherein in a direction perpendicular to a traveling direction of the electrode plate, a spacing between adjacent holes is L2, and 2 mm ≤ L2 ≤ 10 mm.

7. The electrode plate according to any one of claims 1 to 6, wherein a width of the perforated region along a traveling direction of the electrode plate is L3, and 0 mm < L3 ≤ 20 mm.

8. The electrode plate according to claim 7, wherein the width of the perforated region along the traveling direction of the electrode plate is L3, and 1 mm ≤ L3 ≤ 10 mm.

9. The electrode plate according to any one of claims 1 to 8, wherein a molten pool is formed at an edge of the hole.

10. The electrode plate according to any one of claims 1 to 9, wherein a plurality of the holes are provided, and all the holes are distributed on a plurality of trajectory lines; the holes on a single trajectory line are linearly arranged along a traveling direction of the electrode plate, and the plurality of trajectory lines are arranged in parallel along a direction perpendicular to the traveling direction of the electrode plate.

11. An electrode assembly, wherein the electrode assembly comprises a first electrode plate, a second electrode plate, and a separator, the separator is configured to separate the first electrode plate from the second electrode plate, and at least one of the first electrode plate and the second electrode plate is the electrode plate according to any one of claims 1 to 10.

12. A battery cell, comprising a packaging film and the electrode assembly according to claim 11, wherein the packaging film is wrapped outside the electrode assembly.

13. A battery, comprising at least one battery cell according to claim 12.

14. An electric device, comprising the battery cell according to claim 12 or the battery according to claim 13, wherein the battery cell or the battery is configured to store or provide electric energy.
